# EUROPEAN PATENT SPECIFICATION

(11) **EP 1 628 433 B1**
(45) Date of publication and mention of the grant of the patent: **08.11.2006**
(21) Application number: 04019778.2
(22) Date of filing: 20.08.2004
(51) Int. Cl.: H04L 12/24, H04L 29/08

(54) **Method and system for configuration of a client device from a host system that includes drivers**
Verfahren und Vorrichtung zur Clientkonfiguration von einem Konfigurationshost mit Drivers
Méthode et système pour la configuration d'un client à partir d'un terminal de configuration avec des drivers

(43) Date of publication of application: 22.02.2006
(73) Proprietor: Research In Motion Limited, Waterloo, Ontario N2L 3W8 (CA)
(72) Inventor: Zhang, Haining, Kanata, Ontario K2K 2L5 (CA); Matton, Maxime, Waterloo, Ontario NL2 1W5 (CA)
(74) Representative: Bewley, Ewan Stuart

(56) References cited:
- WO-A-02/062031
- US-A1- 2004 073 912
- US-B1- 6 349 274
- ANONYMOUS: "CompanionLink User's Guide" [Online] 2001, COMPANIONLINK SOFTWARE INC. , XP002320073 Retrieved from the Internet: URL:http://www.elwoodstudio.com/PDF/COMPAN IONLINK_ENGLISH.PDF> * page 1 - page 2 * * page 10 * * page 13 - page 14 *
- ANONYMOUS: "Communicator 3000 MPE/iX Express 1 Based on RElease 6.0" INTERNET ARTICLE, [Online] vol. 10, no. 2, July 1999 (1999-07), pages 1-94, XP002329112 PALO ALTO, USA Retrieved from the Internet: URL:http://docs.hp.com/en/30216-90286/3021 6-90286.pdf>
- DAMIEN MILLER: "SSH tips, tricks & protocol tutorial" AUUG WINTER 2002, August 2002 (2002-08), pages 1-16, XP002329113

## Description

The present application deals with a method and system for configuring a communications client on a host device and, more specifically, to configuring a communications client using a standard configuration application and the host device's drivers.

In a host device, it is sometimes desirable to add a client onto the host to perform functionality that the host normally would not include. This could, for example, include the addition of a data client onto a mobile device. Other examples of adding a client to host device would, however, be known to those skilled in the art.

A configuration application for the client allows parameters to be set to ensure the proper functioning of the client. For example, in a client in which secure communications needs to be ensured, an encryption key could be set for the client to allow encrypted communications between a server and the client.

A host device typically includes a communication means for communicating with the device from an external source. Such external sources include, for example, personal computers with configuration programs on them. Drivers are needed on these external devices in order to communicate with the host device.

A problem with configuring a client that resides on a host device is that the drivers for each host device will be different and, therefore, the client configuration application needs to be changed for each different host device to allow communication with that host device.
Prior art documents US6349274, WO 02/062031, Companionslink User's Guide" by Companionslink SW INC and "Communicator 3000 MPE/iX Express 1 based on release 6.0" by Hewlett Packard disclose a configuration application in a device to configure another device using drivers of this latter device.

The present system and method provides an abstract layer between a client configuration application and a set of host drivers in order to allow the configuration of a client on a host device without having to change the client configuration application. The client on the host device can thereby be configured regardless of the specific physical link between the host device and the configuring device.

A series of calls made between the client configuration application and the host drivers are defined in this abstract layer in order to ensure that the client configuration application has access to the client on the host device. These calls can be uniform regardless of the host device by having an abstract interface layer between the client' configuration application and the host drivers.

The present application therefore provides a system for configuring a communications client on a host device using a configuration application on a configuring device, the system comprising: a link between the configuring device and the host device; host drivers for communicating between the host device and the configuring device over the link; and an interface between the host drivers and the configuration application, wherein said interface allows said configuration application to be independent of the host drivers by converting calls by the configuration application to a client into calls to the host device while allowing the configuration application to configure the communications client.

The present application further provides a method for configuring a communications client on a host device from a configuration application on a configuring device, the host device being linked to the configuration device, the method comprising the steps of: adding a set of host drivers to the configuration device specific for the host device and link; and providing an interface between the configuration application and the set of host drivers, the interface being adapted to communicate with the host drivers by converting calls by the configuration application to a client into calls to the host device, wherein the configuration application can communicate with the communications client without changing the configuration application for the host device or set of host drivers.

### BRIEF DESCRIPTION OF THE DRAWINGS

The present system and method will be better understood with reference to the drawings in which**:**
**FIGURE 1** is a schematic diagram of the components and data flow according to the present system and method;
**FIGURE 2** is an example of data calls defined in the abstract layer between the client configuration application and the host drivers;
**FIGURE 3** is a block diagram of an example architecture of a client on a host device; and
**FIGURE 4** is a block diagram illustrating a host mobile station.

### DESCRIPTION OF PREFERRED EMBODIMENTS

The system and method below will be described with relation to a data client on a host mobile device. However, this is not meant to limit the scope of the present system and method and other clients and hosts are considered to be within the scope of the present application. The use of a data client on a host device is used for illustration only.

The present system and method is directed to the configuration of a client on a host device. A data client will need to be configured for a variety of reasons from a configuration device such as a laptop or a desktop computer. For example, in a data client configuration parameters could include an encryption key for secure communication between a server and the host device and, ultimately, the client on the host device. Other configuration parameters could include a service book to set the server identifier that the client should communicate with. A configuration tool could also include a back-up/restore for client data such as e-mail or calendar events that a user wishes to restore or save.

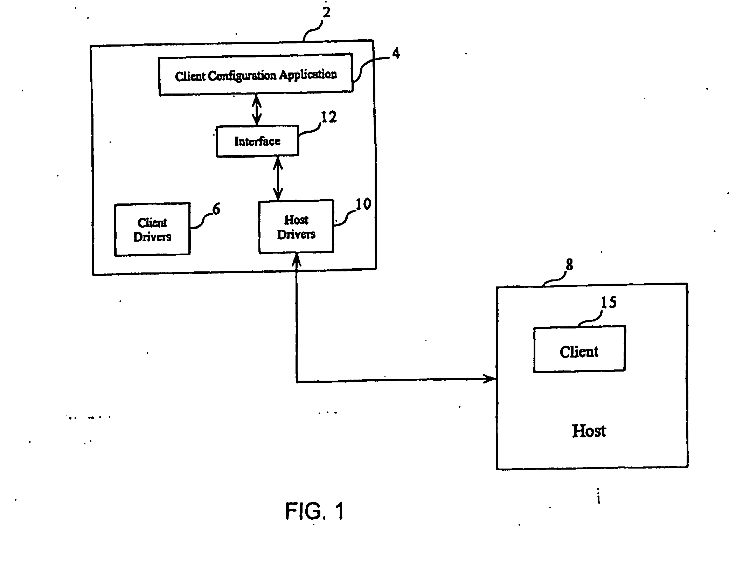

Reference is made to **Figure 1.** A client configuration application **4** is an application used to configure the parameters of a client. As indicated above, these could include encryption keys, backups, restores, service books or other parameters.

A client configuration application **4** is located on a configuration device **2** and would normally communicate with a client **15** on a native device (not shown) through native drivers **6.** This is only available when the client is on its own device, and not on a host device

If the client is instead configured to reside on a host device **8** the configuration device **2** will need to communicate with host device **8.** This is accomplished through the use of drivers that the host device will recognize. In the preferred embodiment host drivers **10** are used to communicate with host device **8.** Host drivers are known and reside on configuration device **2.**

Configuration device **2** uses host drivers **10** to communicate over whatever physical link is available for the host device **8.** This could include, but is not limited to, Universal Serial Bus (USB), Bluetooth, IrDA and serial ports.

As will be appreciated by one skilled in the art, various host devices **8** could be used. Each host device further could have a different physical link between the device and configuration device **2.** Each host device **8** could also have different host drivers to communicate through that physical link.

If client configuration application **4** needs to communicate with a client, regardless of what host **8** the client is on, it is, undesirable that client configuration application **4** be re-written for each host device **8.** Client configuration application **4** would continually need to be updated to allow communication with new devices or upgraded devices.

The present system and method therefore provides an interface **12** between a client configuration application **4** and host drivers **10.** Interface **12** is an abstract layer used to convert calls by the client configuration application to a client device into calls to the host device **8.** The advantage of adding interface **12** is that very little change needs to be made to existing client configuration application **4** and that any host **8** can be used merely by substituting a different implementation of interface **12.**

In this way, if the client is on a first host device **8,** a first interface implementation could be used. If a second host device is provided with a client, configuration device **2** merely adds another interface implementation **12** for the second host device, and the client configuration application **4** uses the second interface implementation **12** to communicate with the second host device **8.**

As will be appreciated by one skilled in the art, a single configuration device **2** can be used to configure clients on a variety of host devices **8.** When configuration device **2** is used to configure multiple host devices **8,** multiple interface implementations **12** are added or present on configuration device **2.**

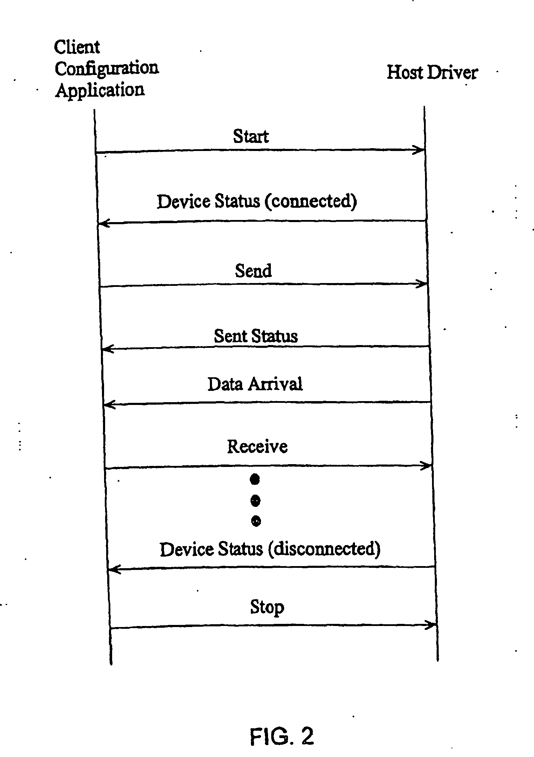

Reference is now made to **Figure 2.** In order to provide communications between client configuration application **4** and host drivers **10,** interface **12** includes a number of calls to host drivers **10** to allow communication with host device **8. Figure 2** shows an example of function calls defined in the interface between client configuration application and the host drivers that could be used to send and receive data and to know the device status of the host device **8** within client configuration application **4.** Other data calls would be known to those skilled in the art and could be used instead of the example of **Figure 2**.

In **Figure 2,** interface **12** first sends a start message to host drivers **10.** This indicates to host drivers **10** that client configuration application has started and is awaiting to configure client **15** on host device **8.**

When host device **8** is connected to configuration device **2,** host drivers **10** learn of this connection and descend a device status (connected) message to client configuration application **4.** Client configuration application **4** then knows that host device **8** is connected and that configuration for client **15** can occur.

In the example of **Figure 2,** client configuration application **4** through interface **12** then uses a send command to host drivers **10.** Host drivers **10** conveys data included in this send command to client **15** on host device **8** and a sent status message is sent back from host drivers **10** to interface **12.** A sent status message is used to indicate whether or not the message data was sent successfully.

If data arrives on host drivers **10** from host device **8** that is meant for client configuration application **4,** host drivers **10** can send a message "data arrival" through interface **12.** Client configuration application **4** through interface **12** can then send a receive command to obtain the data that has arrived from host device **8.**

Using the above messages and commands, data can be sent and retrieved from client **15** on host device **8.** This continues until the host device **8** is disconnected from the configuration device **2.** Upon disconnect, host drivers **10** send a message "device status (disconnected)" to interface **12** which lets client configuration application **4** know that it can no longer configure client **15.**

Client configuration application **4** then sends a stop command to host drivers **10** that it is no longer communicating with host drivers **10.**

Based on the above, interface **12** provides an abstract layer between client configuration application **4** and host drivers **10** which allows communications to and from a client **15** on a host device **8** without having to modify client configuration application **4.**

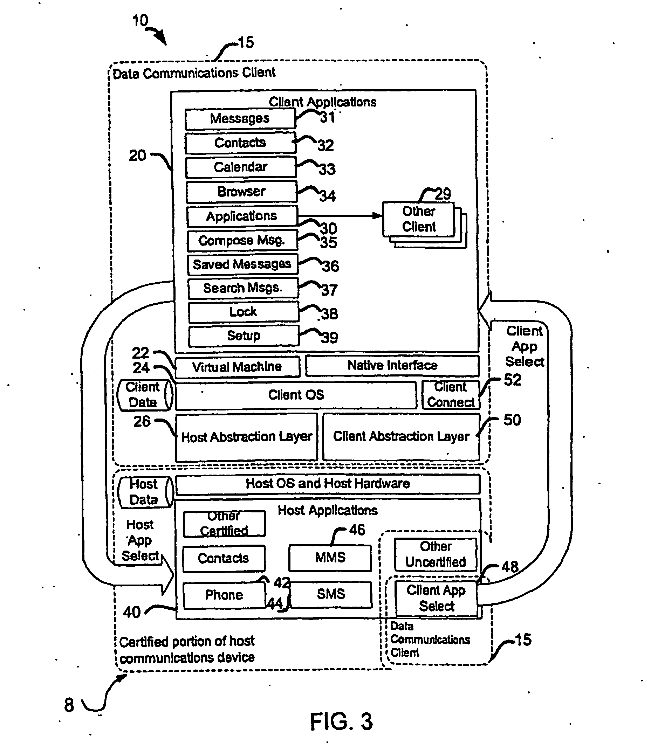

While the relationship between a client and a host on host device **8** can include a variety of configurations that would be known to those skilled in the art, in one embodiment the client **15** and host are divided into an architecture that includes client applications **20** for client **15** running on top of a virtual machine **22.** Reference is now made to **Figure 3.**

Client applications **20** can be any application that is designed to run on a virtual machine **22.** In the example of **Figure 3,** these could include a messages application **31** for viewing messages that have been received, a contacts application **32,** which presents an address book including phone numbers, e-mail addresses or other contact information for individuals or companies, a calendar application **33** for scheduling appointments and managing time, a browser application **34** for browsing the internet or other network, a compose-message application **35** to compose messages for SMS or e-mail, a save-messages application **36** to view messages that have been saved, a search-messages application **37** to search for a particular message, a lock application **38** to lock the keyboard and screen of the mobile device, and a set-up application **39** to change the set-up configuration for client **15.** Other applications **30** could also exist as part of client applications **20** and the above-listed applications are not meant to be limiting. Further, other clients besides client **15** could exist on host device **8** and these other clients could have applications **29** which could be invoked from application **30.**

Virtual machine **22** is preferably started at power-up of host device **8** and stays running no matter what. In one preferred embodiment, virtual machine **22** is a JAVA virtual machine and client applications **20** are JAVA applications.

All client applications **20** use virtual machine **22** to invoke instances of objects created by client applications **20.**

A feature such as a hardware call from client applications **20** would normally go through client OS **24.** Client OS **24** includes a number of primitives for interacting with hardware. However, in the case that client applications **20** are built onto a host device, it is preferable that instead of interacting with features directly, client OS **24** interacts with the host abstraction layer **26.** Host abstraction layer **26** converts calls from client applications **20** to host calls through a native interface **28.** Native interface **28** invokes host applications **40** in order to use the host-dependent features on the host device.

In order to start one of the above applications, it is desirable that a client application can be activated from a host application **40.** When an application is selected in the host environment, a client application selection application **48** uses a set of application program interfaces (APIs) by which the host operating system can request a client application **20** to activate.

Client application selection application **48** uses a client abstraction layer **50** to activate an application within client applications **20.** Client application selection application **48** calls a function that is translated in client abstraction layer **50.** Client abstraction layer **50** then uses virtual machine **22** to activate a client application **20.**

Client abstraction layer **50,** in alternative embodiments, can either inject the client OS **24** event into virtual machine **22** which causes the selected client application **20** to become active or, alternatively, performs a "reverse-native call", either through client OS **24** or via client connect **52** to manipulate the native representation of some client object which causes the selected client application **20** to become active.

In the configuration of a client **15** on a host device **8,** a client application **20** for configuring client **15** can be started and can use data received from configuration device **2** to configure client **15.** This client can be started as a result of a call from host driver **10** on configuration device **2.** This call is received by host device **2** and through a client application selection application **40** starts a client application **20** for configuring client **15.**

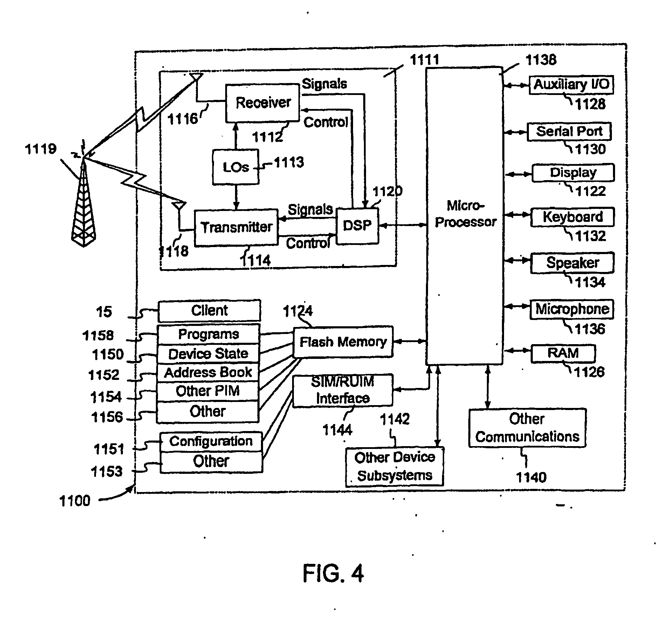

Reference is now made to **Figure 4. Figure 4** is a block diagram illustrating a host mobile station including preferred embodiments of the techniques of the present application. Mobile station **1100** is preferably a two-way wireless communication device having at least voice and data communication capabilities. Mobile station **1100** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **1100** is enabled for two-way communication, it will incorporate a communication subsystem **1111,** including both a receiver **1112** and a transmitter **1114,** as well as associated components such as one or more, preferably embedded or internal, antenna elements **1116** and **1118,** local oscillators (LOs) **1113,** and a processing module such as a digital signal processor (DSP) **1120.** As will be apparent to those skilled in the field of communications, the particular design of the communication subsystem **1111** will be dependent upon the communication network in which the device is intended to operate. For example, mobile station **1100** may include a communication subsystem **1111** designed to operate within the Mobitex^{™} mobile communication system, the DataTAC^{™} mobile communication system, GPRS network, UMTS network, EDGE network or CDMA network.

Network access requirements will also vary depending upon the type of network **1119.** For example, in the Mobitex and DataTAC networks, mobile station **1100** is registered on the network using a unique identification number associated with each mobile station. In UMTS and GPRS networks, and in some CDMA networks, however, network access is associated with a subscriber or user of mobile station **1100.** A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as "911" emergency calling, may be available, but mobile station **1100** will be unable to carry out any other functions involving communications over the network **1100.** The SIM/RUIM interface **1144** is normally similar to a card-slot into which a SIM/RUIM card can be inserted and ejected like a diskette or PCMCIA card. The SIM/RUIM card can have approximately 64K of memory and hold many key configuration **1151,** and other information **1153** such as identification, and subscriber related information.

When required network registration or activation procedures have been completed, mobile station **1100** may send and receive communication signals over the network **1119.** Signals received by antenna **1116** through communication network **1119** are input to receiver **1112,** which may perform such common receiver functions as signal amplification, frequency down conversion, filtering, channel selection and the like, and in the example system shown in **Figure 4,** analog to digital (A/D) conversion. A/D conversion of a received signal allows more complex communication functions such as demodulation and decoding to be performed in the DSP **1120.** In a similar manner, signals to be transmitted are processed, including modulation and encoding for example, by DSP **1120** and input to transmitter **1114** for digital to analog conversion, frequency up conversion, filtering, amplification and transmission over the communication network **1119** via antenna **1118.** DSP **1120** not only processes communication signals, but also provides for receiver and transmitter control. For example, the gains applied to communication signals in receiver **1112** and transmitter **1114** may be adaptively controlled through automatic gain control algorithms implemented in DSP **1120.**

Network **1119** may further communicate with multiple systems (not shown). For example, network **1119** may communicate with both an enterprise system and a web client system in order to accommodate various clients with various service levels.

Mobile station **1100** preferably includes a microprocessor **1138** which controls the overall operation of the device. Communication functions, including at least data and voice communications, are performed through communication subsystem **1111.** Microprocessor 1138 also interacts with further device subsystems such as the display **1122,** flash memory **1124,** random access memory (RAM) **1126,** auxiliary input/output (I/O) subsystems **1128,** serial port **1130,** keyboard **1132,** speaker **1134,** microphone **1136,** a short-range communications subsystem **1140** and any other device subsystems generally designated as **1142.**

Some of the subsystems shown in **Figure 4** perform communication-related functions, whereas other subsystems may provide "resident" or on-device functions. Notably, some subsystems, such as keyboard **1132** and display **1122,** for example, may be used for both communication-related functions, such as entering a text message for transmission over a communication network, and device-resident functions such as a calculator or task list.

Operating system software used by the microprocessor **1138** is preferably stored in a persistent store such as flash memory **1124,** which may instead be a read-only memory (ROM) or similar storage element (not shown). Those skilled in the art will appreciate that the operating system, specific device applications, or parts thereof, may be temporarily loaded into a volatile memory such as RAM **1126.** Received communication signals may also be stored in RAM **1126.**

As shown, flash memory **1124** can be segregated into different areas for both computer programs **1158** and program data storage **1150, 1152, 1154** and **1156.** These different storage types indicate that each program can allocate a portion of flash memory **1124** for their own data storage requirements. Microprocessor **1138,** in addition to its operating system functions, preferably enables execution of software applications on the mobile station. A predetermined set of applications that control basic operations, including at least data and voice communication applications for example, will normally be installed on mobile station **1100** during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **1119.** In a preferred embodiment, the PIM data items are seamlessly integrated, synchronized and updated, via the wireless network **1119,** with the mobile station user's corresponding data items stored or associated with a host computer system. Further applications may also be loaded onto the mobile station **1100** through the network **1119,** an auxiliary I/O subsystem **1128,** serial port **1130,** short-range communications subsystem **1140** or any other suitable subsystem **1142,** and installed by a user in the RAM **1126** or preferably a non-volatile store (not shown) for execution by the microprocessor **1138.** Such flexibility in application installation increases the functionality of the device and may provide enhanced on-device functions, communication-related functions, or both. For example, secure communication applications may enable electronic commerce functions and other such financial transactions to be performed using the mobile station **1100.**

In a data communication mode, a received signal such as a text message or web page download will be processed by the communication subsystem **1111** and input to the microprocessor **1138,** which preferably further processes the received signal for output to the display **1122,** or alternatively to an auxiliary I/O device **1128.** A user of mobile station **1100** may also compose data items such as email messages for example, using the keyboard **1132,** which is preferably a complete alphanumeric keyboard or telephone-type keypad, in conjunction with the display **1122** and possibly an auxiliary I/O device **1128.** Such composed items may then be transmitted over a communication network through the communication subsystem **1111.**

For voice communications, overall operation of mobile station **1100** is similar, except that received signals would preferably be output to a speaker **1134** and signals for transmission would be generated by a microphone **1136.** Alternative voice or audio I/O subsystems, such as a voice message recording subsystem, may also be implemented on mobile station **1100.** Although voice or audio signal output is preferably accomplished primarily through the speaker **1134,** display **1122** may also be used to provide an indication of the identity of a calling party, the duration of a voice call, or other voice call related information for example.

Serial port **1130** in **Figure 4** would normally be implemented in a personal digital assistant (PDA)-type mobile station for which synchronization with a user's desktop computer as outline above. Such a port **1130** enables a user to set preferences through an external device or software application and would extend the capabilities of mobile station **1100** by providing for information or software downloads to mobile station **1100** other than through a wireless communication network. As indicated above, the alternate download path may for example be used to load an encryption key onto the device through a direct and thus reliable and trusted connection to thereby enable secure device communication.

Other communications subsystems **1140,** such as a short-range communications subsystem, is a further optional component which may provide for communication between mobile station **1100** and different systems or devices, which need not necessarily be similar devices. For example, the subsystem **1140** may include an infrared device and associated circuits and components or a Bluetooth^{™} communication module to provide for communication with similarly enabled systems and devices.

The above-described embodiments are meant to be illustrative of preferred embodiments and are not intended to limit the scope of the present application. Also, various modifications, which would be readily apparent to one skilled in the art, are intended to be within the scope of the present application. The only limitations to the scope of the present application are set forth in the following claims.

## Claims

1. A system for configuring a communications client (15) on a host device (8), the system comprising:
a configuration device (2);
a host-independent configuration application (4) on the configuration device;
a link between the configuration device and the host device;
host drivers (10) for communicating between the host device and the
configuration device over the link; and
an interface (12) between the host drivers and the configuration application,
wherein said interface allows said configuration application to be independent of the host drivers by converting calls by the configuration application to a client into calls to the host device while allowing the configuration application to configure the communications client.

2. The system of claim 1, wherein the link comprises any of: a Bluetooth connection; an IrDA connection; or a physical serial link.

3. The system of claim 1 or claim 2, wherein the configuration device (2) is a personal computer.

4. The system of any one of claims 1 to 3, wherein the host device (8) is a mobile station.

5. The system of any one of claims 1 to 4, wherein the communications client (15) is a data client.

6. The system of any one of claims 1 to 5, wherein the communications client (15) is configured to have an encryption key.

7. The system of any one of claims 1 to 6, wherein the communications client (15) is configured to back up and restore data.

8. The system of any one of claims 1 to 7, wherein the communications client (15) is configured to set parameters in a service book.

9. The system of any one of claims 1 to 8, wherein the host device (8) comprises a divided architecture having:
client applications (20);
host applications (40);
a virtual machine (22) for the client applications; and
an interface (28) between the host applications and client applications allowing client applications to start host applications and host applications to start client applications using the virtual machine,
wherein the host drivers (10) use a host application (40) to start a client application (20) to configure the communications client (15).

10. A method for configuring a communications client (15) on a host device (8) from a configuration device (2), the host device being linked to the configuration device, the method comprising the steps of:
adding a set of host drivers (10) to the configuration device specific for the host device and link;
providing a host-independent configuration application (4) on the configuration device; and
providing an interface (12) between the host-independent configuration application and the set of host drivers, the interface being adapted to communicate with the host drivers by converting calls by the configuration application to a client into calls to the host device, wherein the configuration application can communicate with the communications client without changing the configuration application for the host device or set of host drivers.

11. The method of claim 10, wherein the host device (8) is a mobile device.

12. The method of claim 10 or claim 11, wherein the communications client (15) is a data client.

13. The method of any one of claims 10 to 12, wherein configuring the communications client (15) involves setting an encryption key.

14. The method of any one of claims 10 to 13, wherein configuring the communications client (15) involves setting a server identifier.

15. The method of any one of claims 10 to 14, wherein configuring the communications client (15) comprises backing up and restoring data.

## Patentansprüche

1. System zum Konfigurieren eines Kommunikationsclienten (15) in einer Zentralvorrichtung (8), wobei das System Folgendes umfasst:
eine Konfigurationsvorrichtung (2);
eine vom Zentralrechner unabhängige Konfigurationsanwendung (4) in der Konfigurationsvorrichtung;
eine Verbindung zwischen der Konfigurationsvorrichtung und der Zentralvorrichtung;
Zentralrechnertreiber (10) zur Kommunikation mit der Zentralvorrichtung und der Konfigurationsvorrichtung und umgekehrt über die Verbindung; und
eine Schnittstelle (12) zwischen den Zentralrechnertreibern und der Konfigurationsanwendung, wobei die Schnittstelle die Konfigurationsanwendung befähigt, von den Zentralrechnertreibern unabhängig zu sein, indem Anrufe von der Konfigurationsanwendung zu einem Clienten in Anrufe zur Zentralvorrichtung umgewandelt werden, während der Konfigurationsanwendung ermöglicht wird, den Kommunikationsclienten zu konfigurieren.

2. System nach Anspruch 1, wobei die Verbindung Folgendes umfasst: eine Bluetooth-Verbindung, eine IrDA-Verbindung oder eine physikalische serielle Verbindung.

3. System nach Anspruch 1 oder Anspruch 2, wobei die Konfigurationsvorrichtung (2) ein PC ist.

4. System nach einem der Ansprüche 1 bis 3, wobei die Zentralvorrichtung (8) eine Mobilstation ist.

5. System nach einem der Ansprüche 1 bis 4, wobei der Kommunikationsclient (15) ein Datenclient ist.

6. System nach einem der Ansprüche 1 bis 5, wobei der Kommunikationsclient (15) so konfiguriert ist, dass er einen Verschlüsselungsschlüssel aufweist.

7. System nach einem der Ansprüche 1 bis 6, wobei der Kommunikationsclient (15) so konfiguriert ist, dass er eine Sicherheitskopie von Daten erstellt und diese rückgewinnt.

8. System nach einem der Ansprüche 1 bis 7, wobei der Kommunikationsclient (15) so konfiguriert ist, dass er Parameter in einem Dienstbuch einstellt.

9. System nach einem der Ansprüche 1 bis 8, wobei die Zentralvorrichtung (8) eine geteilte Architektur umfasst, die Folgendes aufweist:
Clientanwendungen (20),
Zentralrechneranwendungen (40),
eine virtuelle Maschine (22) für die Clientanwendungen und
eine Schnittstelle (28) zwischen den Zentralrechneranwendungen und den Clientanwendungen, die unter Verwendung der virtuellen Maschine den Clientanwendungen ermöglicht, Zentralrechneranwendungen auszuführen und den Zentralrechneranwendungen ermöglicht, Clientanwendungen auszuführen,
wobei die Zentralrechnertreiber (10) eine Zentralrechneranwendung (40) verwenden, um eine Clientanwendung (20) auszuführen, um den Kommunikationsclienten (15) zu konfigurieren.

10. Verfahren zum Konfigurieren eines Kommunikationsclienten (15) in einer Zentralvorrichtung (8) ausgehend von einer Konfigurationsvorrichtung (2), wobei die Zentralvorrichtung mit der Konfigurationsvorrichtung verbunden ist und das Verfahren folgende Schritte umfasst:
Hinzufügen einer Gruppe von Zentralrechnertreibern (10) zur Konfigurationsvorrichtung, die für die Zentralvorrichtung und die Verbindung spezifisch sind,
Bereitstellen einer vom Zentralrechner unabhängigen Konfigurationsanwendung (4) in der Konfigurationsvorrichtung und
Bereitstellen einer Schnittstelle (12) zwischen der vom Zentralrechner unabhängigen Konfigurationsanwendung und der Gruppe von Zentralrechnertreibern, wobei die Schnittstelle dafür ausgelegt ist, mit den Zentralrechnertreibern zu kommunizieren, indem Anrufe von der Konfigurationsanwendung zu einem Clienten in Anrufe zur Zentralvorrichtung umgewandelt werden, wobei die Konfigurationsanwendung mit dem Kommunikationsclienten kommunizieren kann, ohne die Konfigurationsanwendung für die Zentralvorrichtung oder die Gruppe von Zentralrechnertreibern zu ändern.

11. Verfahren nach Anspruch 10, wobei die Zentralvorrichtung (8) eine Mobilvorrichtung ist.

12. Verfahren nach Anspruch 10 oder Anspruch 11, wobei der Kommunikationsclient (15) ein Datenclient ist.

13. Verfahren nach einem der Ansprüche 10 bis 12, wobei das Konfigurieren des Kommunikationsclienten (15) die Einstellung eines Verschlüsselungsschlüssels umfasst.

14. Verfahren nach einem der Ansprüche 10 bis 13, wobei das Konfigurieren des Kommunikationsclienten (15) die Einstellung eines Serveretiketts umfasst.

15. Verfahren nach einem der Ansprüche 10 bis 14, wobei das Konfigurieren des Kommunikationsclienten (15) die Erstellung von Datensicherheitskopien und die Datenrückgewinnung umfasst.

## Revendications

1. Un système pour configurer un client de communications (15) sur un dispositif hôte (8), ledit système comportant :
un dispositif de configuration (2) ;
une application de configuration indépendante de l'hôte (4) sur le dispositif de configuration ;
une liaison entre le dispositif de configuration et le dispositif hôte ;
des pilotes d'hôte (10) pour communiquer entre le dispositif hôte et le dispositif de configuration sur la liaison ; et
une interface (12) entre les pilotes d'hôte et l'application de configuration ;
ladite interface permettant à ladite application de configuration d'être indépendante des pilotes d'hôte en convertissant les appels, faits par l'application de configuration à un client, en appels au dispositif hôte, tout en permettant à l'application de configuration de configurer le client de communications.

2. Le système de la revendication 1, dans le cadre duquel la liaison comporte une quelconque de ces liaisons : une connexion Bluetooth ; une connexion IrDA ; ou une liaison série physique.

3. Le système de la revendication 1 ou 2, dans le cadre duquel le dispositif de configuration (2) est un ordinateur personnel.

4. Le système de l'une quelconque des revendications 1 à 3, dans le cadre duquel le dispositif hôte (8) est une station de téléphonie mobile.

5. Le système de l'une quelconque des revendications 1 à 4, dans le cadre duquel le client de communications (15) est un client de données.

6. Le système de l'une quelconque des revendications 1 à 5, dans le cadre duquel le client de communications (15) est configuré pour avoir une clé de chiffrement.

7. Le système de l'une quelconque des revendications 1 à 6, dans le cadre duquel le client de communications (15) est configuré pour sauvegarder et restaurer des données.

8. Le système de l'une quelconque des revendications 1 à 7, dans le cadre duquel le client de communications (15) est configuré à des paramètres fixes dans un livret de service.

9. Le système de l'une quelconque des revendications 1 à 8, dans le cadre duquel le dispositif hôte (8) comporte une architecture divisée possédant :
des applications client (20) ;
des applications hôte (40) ;
une machine virtuelle (22) pour les applications client ; et
une interface (28) entre les applications hôte et les applications client permettant aux applications client de lancer des applications hôte, et aux applications hôte de lancer des applications client au moyen de la machine virtuelle,
les pilotes d'hôte (10) utilisant une application hôte (40) pour lancer une application client (20) afin de configurer le client de communications (15).

10. Une méthode pour configurer un client de communications (15) sur un dispositif hôte (8) à partir d'un dispositif de configuration (2), le dispositif hôte étant lié au dispositif de configuration, ladite méthode faisant intervenir les étapes suivantes :
ajouter un ensemble de pilotes d'hôte (10) au dispositif de configuration spécifique pour le dispositif d'hôte et la liaison ;
fournir une application de configuration indépendante de l'hôte (4) sur le dispositif de configuration ; et
assurer une interface (12) entre l' application de configuration indépendante de l'hôte et l'ensemble de pilotes d'hôte, l'interface étant adaptée pour communiquer avec les pilotes d'hôte en convertissant les appels, faits par l'application de configuration à un client, en appels au dispositif hôte,
l'application de configuration pouvant communiquer avec le client de communications sans avoir à changer l'application de configuration pour le dispositif hôte ou l'ensemble de pilotes d'hôte.

11. La méthode de la revendication 10, dans le cadre de laquelle le dispositif hôte (8) est un dispositif mobile.

12. La méthode de la revendication 10 ou 11 dans le cadre de laquelle le client de communications (15) est un client de données.

13. La méthode de l'une quelconque des revendications 10 à 12, dans le cadre de laquelle le client de communications (15) met en jeu la définition d'une clé de chiffrement.

14. La méthode de l'une quelconque des revendications 10 à 13, dans le cadre de laquelle la configuration du client de communications (15) met en jeu la définition d'un identifiant de serveur.

15. La méthode de l'une quelconque des revendications 10 à 14, dans le cadre de laquelle la configuration du client de communications (15) fait intervenir la sauvegarde et la restauration de données.
